# EUROPEAN PATENT APPLICATION

(11) **EP 4 659 975 A1**
(43) Date of publication of application: **10.12.2025**
(21) Application number: 25181096.6
(22) Date of filing: 05.06.2025
(51) Int. Cl.: B60H 1/00, B60H 1/32

(54) **METHODS AND SYSTEMS FOR REDUCING ICE/FROST BUILDUP IN AN EVAPORATOR BLOWER SPACE OF A TRANSPORT CLIMATE CONTROL SYSTEM**

(30) Priority: 05.06.2024 IN 202441043490
(71) Applicant: Thermo King LLC, Minneapolis, MN 55420 (US)
(72) Inventor: NARAYANAN V, Kishore, Minneapolis, Minnesota, 55420 (US); KOPPINEEDI, Srinivasa Rao, Minneapolis, Minnesota, 55420 (US)
(74) Representative: Haseltine Lake Kempner LLP

(57) **Abstract**

Method for reducing ice and/or frost buildup in an evaporator blower space of a transport climate control system, wherein the evaporator blower space houses an evaporator blower (2110) of the transport climate control system, the transport climate control system includes a controller instructing the transport climate control system to operate in a defrost mode, the controller monitors an evaporator blower space parameter indicative of ice and/or frost buildup in the evaporator blower space, the controller determinines ice and/or frost buildup in the evaporator blower space based on the evaporator blower space parameter, and the controller adjusts operation of the transport climate control system to reduce ice and/or frost buildup in the evaporator blower space.

## Description

### FIELD

This disclosure relates generally to a transport climate control system. More specifically, the disclosure relates to methods and systems for reducing ice and/or frost buildup in an evaporator blower space of a transport climate control system.

### BACKGROUND

A transport climate control system can include, for example, a transport refrigeration system (TRS) and/or a heating, ventilation and air conditioning (HVAC) system. A TRS is generally used to control an environmental condition (e.g., temperature, humidity, air quality, and the like) within an internal space or cargo space of a transport unit (e.g., a truck, a trailer, a container (such as a container on a flat car, an intermodal container, etc.), a box car, a semi-tractor, a bus, or other similar transport unit). The TRS can maintain environmental condition(s) of the internal space to maintain cargo (e.g., produce, frozen foods, pharmaceuticals, etc.) In some embodiments, the transport unit can include a HVAC system to control a climate within a passenger space of the vehicle.

### SUMMARY

This disclosure relates generally to a transport climate control system. More specifically, the disclosure relates to methods and systems for reducing ice and/or frost buildup in an evaporator blower space of a transport climate control system.

Applicant has found that terminating defrost based on, for example, a temperature of the evaporator coil can still lead to frost/ice buildup within the evaporator blower space. Accordingly, the embodiments described herein can extend operation of a defrost mode to remove frost/ice buildup in the evaporator blower space of a climate control unit. Thus, the defrost mode can not only be used to remove and prevent frost/ice buildup on an evaporator coil, but also components within the evaporator blower space including an evaporator blower, an evaporator blower cover, an evaporator drain, and an evaporator blower bulkhead at least partially defining the evaporator blower space. Preventing and reducing frost/ice buildup in the evaporator blower space can prevent the evaporator blower from being unbalanced and generating undesirable vibration which can lead to failure of evaporator blower mounts securing the evaporator blower and ultimately evaporator blower failure. Preventing the undesirable vibration can also prevent damage to fins of the evaporator coil, damage to the evaporator blower bulkhead, and components of the transport climate control system disposed adj acent to the evaporator blower space. Preventing the undesirable vibration can also prevent reduction in airflow from the evaporator blower and thereby prevent a reduction in performance of the transport climate control system.

In one embodiment, a method for reducing ice and/or frost buildup in an evaporator blower space of a transport climate control system is provided. The evaporator blower space houses an evaporator blower of the transport climate control system. The method includes a controller instructing the transport climate control system to operate in a defrost mode. The method also includes the controller monitoring an evaporator blower space parameter indicative of ice and/or frost buildup in the evaporator blower space. Also, the method includes the controller determining ice and/or frost buildup in the evaporator blower space based on the evaporator blower space parameter. Further, the method includes the controller adjusting operation of the transport climate control system to reduce ice and/or frost buildup in the evaporator blower space.

In another embodiment, a transport climate control system is provided. The transport climate control system includes an evaporator blower space and a controller. The evaporator blower space houses an evaporator blower. The controller is configured to instruct the transport climate control system to operate in a defrost mode. Also, the controller is configured to monitor an evaporator blower space parameter indicative of ice and/or frost buildup in the evaporator blower space. Further, the controller is configured to determine ice and/or frost buildup in the evaporator blower space based on the evaporator blower space parameter. Moreover, the controller is configured to adjust operation of the transport climate control system to reduce ice and/or frost buildup in the evaporator blower space.

Other features and aspects will become apparent by consideration of the following detailed description and accompanying drawings.

### BRIEF DESCRIPTION OF THE DRAWINGS

References are made to the accompanying drawings that form a part of this disclosure and which illustrate embodiments in which the systems and methods described in this specification can be practiced.
FIG. 1A illustrates a side view of a truck with a front wall mounted transport climate control unit, according to one embodiment.
FIG. 1B illustrates a perspective view of a climate controlled transport unit attached to a tractor, according to one embodiment.
FIG. 1C illustrates a schematic cross sectional side view of a climate controlled transport unit with a multi-temp transport climate control system, according to an embodiment.
FIG. 1D illustrates a side view of a van with a roof mounted transport climate control unit, according to an embodiment.
FIG. 2 illustrates a schematic diagram of a transport climate control system, according to one embodiment.
FIG. 3 illustrates a flowchart of a method for reducing ice and/or frost buildup in an evaporator blower space of a transport climate control system, according to a first embodiment.
FIG. 4 illustrates a flowchart of a method for reducing ice and/or frost buildup in an evaporator blower space of a transport climate control system, according to a second embodiment.
FIG. 5 illustrates a flowchart of a method for reducing ice and/or frost buildup in an evaporator blower space of a transport climate control system, according to a third embodiment.
FIG. 6 illustrates a flowchart of a method for reducing ice and/or frost buildup in an evaporator blower space of a transport climate control system, according to a fourth embodiment.

Like reference numbers represent like parts throughout.

### DETAILED DESCRIPTION

This disclosure relates generally to a transport climate control system. More specifically, the disclosure relates to methods and systems for reducing ice and/or frost buildup in an evaporator blower space of a transport climate control system.

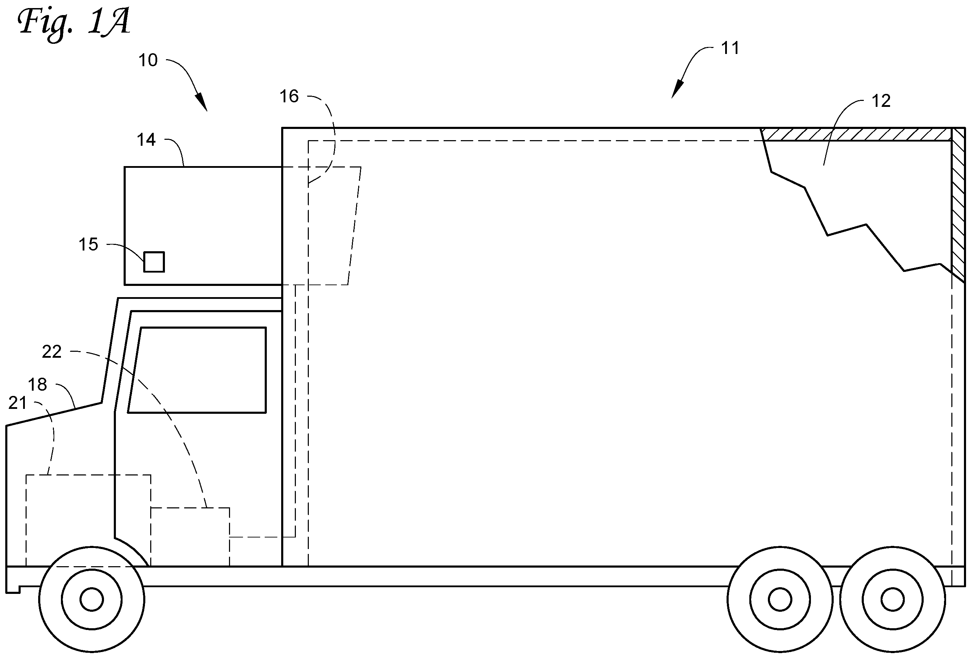

FIG. 1A depicts a temperature-controlled straight truck 11 that includes a climate controlled space 12 for carrying cargo and a transport climate control system 10 for providing climate control to the climate controlled space 12. The transport climate control system 10 includes a transport climate control unit (TCCU) 14 that is mounted to a front wall 16 of the climate controlled space 12. The TCCU 14 includes a transport climate control circuit that connects, for example, a compressor, a condenser, an evaporator, and an expansion valve, and includes fan(s) configured to provide conditioned air within the climate controlled space 12.

The climate control system 10 also includes a programmable climate controller 15 and one or more sensors (not shown) that are configured to measure one or more parameters of the climate control system 10 and communicate parameter data to the climate controller 15. The climate controller 15 may comprise a single integrated control unit or may comprise a distributed network of climate controller elements. The number of distributed control elements in a given network can depend upon the particular application of the principles described herein. The climate controller 15 is configured to control operation of the climate control system 10 including a transport climate control circuit.

The truck 11 further includes a vehicle power bay 18, which houses a prime mover 21, such as a combustion engine (e.g., diesel engine, etc.), an electric motor, etc. that provides power to move the truck 11 and to operate the TCCU 14. In some embodiments, the prime mover 21 can work in combination with an optional machine 22 (e.g., an alternator) to operate the TCCU 14. In some embodiments, the truck 11 can be a hybrid vehicle that is powered by the prime mover 21 in combination with a battery power source or can be an electrically driven truck in which the prime mover 21 is replaced with an electric power source (e.g., a battery power source). In some embodiments, the TCCU 14 can have its own independent power source (e.g., a TCCU prime mover, a TCCU alternator, a TCCU battery power source, etc.) that is separate from the prime mover 21 to provide power to and operate the TCCU 14. A TCCU prime mover can power the TCCU 14 by itself or in combination with a TCCU alternator or the optional machine 22 or a TCCU battery power source. In some embodiments, the TCCU 14 can be powered by a TCCU electric power source (e.g., a battery power source) without the use of a prime mover (e.g., the prime mover 21, a TCCU prime mover, etc.).

While FIG. 1A illustrates a temperature-controlled straight truck 11, it will be appreciated that the embodiments described herein can also apply to any other type of transport unit (TU) including, but not limited to, a container (such as a container on a flat car, an intermodal container, etc.), a box car, or other similar transport unit. container, etc.), a box car, or other similar transport unit.

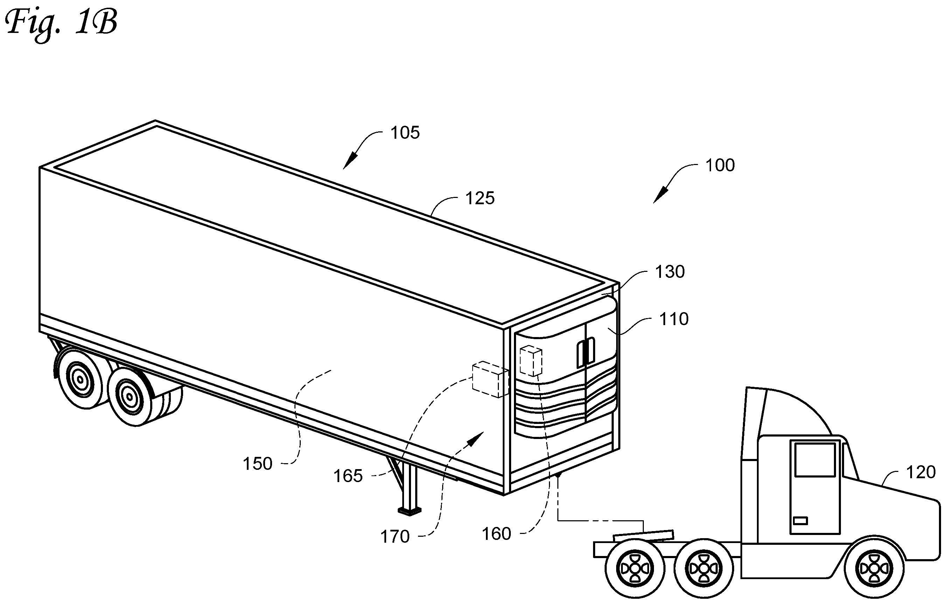

FIG. 1B illustrates one embodiment of a climate controlled transport unit 105 attached to a tractor 120. The climate controlled transport unit 105 includes a transport climate control system 100 for a transport unit 125. The tractor 120 is attached to and is configured to tow the transport unit 125. The transport unit 125 shown in FIG. 1B is a trailer. It will be appreciated that the embodiments described herein are not limited to tractor and trailer units, but can apply to any type of transport unit (e.g., a container on a flat car, an intermodal container, etc.), a truck, a box car, or other similar transport unit. The transport unit 125 can include one or more doors (not shown) that are movable between an open position and a closed position to selectively allow access to a climate controlled space (e.g., internal or cargo space) 150.

The transport climate control system 100 includes a climate control unit (CCU) 110 that provides environmental control (e.g. temperature, humidity, air quality, etc.) within the climate controlled space 150 of the transport unit 125. The climate control system 100 also includes a programmable climate controller 170 and one or more sensors (not shown) that are configured to measure one or more parameters of the climate control system 100 and communicate parameter data to the climate controller 170.

The CCU 110 is disposed on a front wall 130 of the transport unit 125. In other embodiments, it will be appreciated that the CCU 110 can be disposed, for example, on a rooftop or another wall of the transport unit 125. The CCU 110 includes a transport climate control circuit that connects, for example, a compressor, a condenser, an evaporator and an expansion valve and includes fan(s) configured to provide conditioned air within the climate controlled space 150.

The climate controller 170 may comprise a single integrated control unit 160 or may comprise a distributed network of climate controller elements 160, 165, which includes the control unit. The number of distributed control elements in a given network can depend upon the particular application of the principles described herein. The climate controller 170 is configured to control operation of the climate control system 100 including the transport climate control circuit.

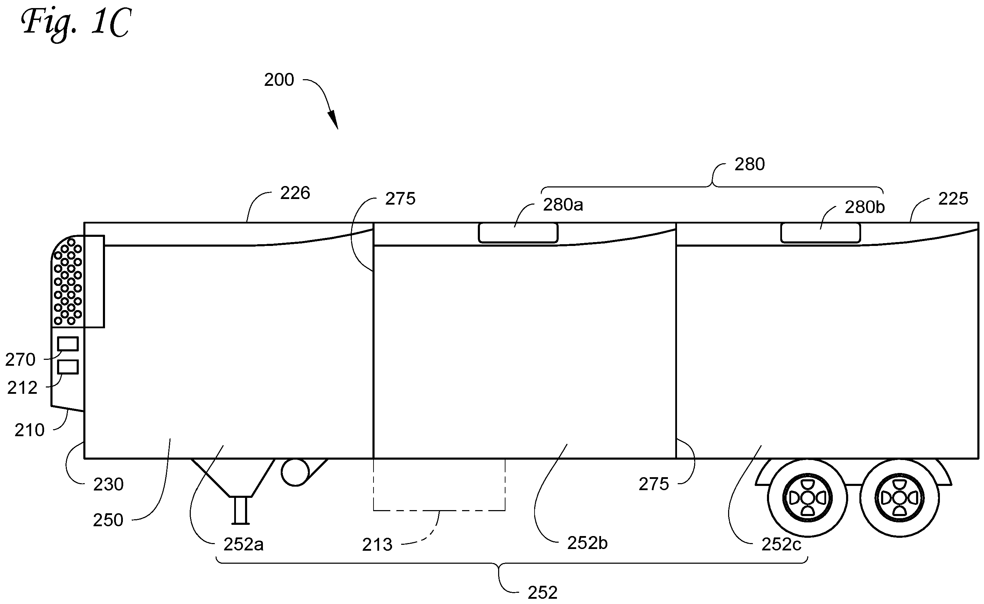

FIG. 1C illustrates one embodiment of a multi-zone transport climate control system (MCCS) 200 for a transport unit (TU) 225 that can be towed, for example, by a tractor (not shown). The MCCS 200 includes a transport climate control unit (TCCU) 210 that provides environmental control (e.g. temperature, humidity, air quality, etc.) within an internal climate controlled space 250 of the TU 225. The MCCS 200 also includes a MCCS controller 270 and one or more sensors (e.g., Hall effect sensors, current transducers, etc.) that are configured to measure one or more parameters (e.g., ambient temperature, compressor suction pressure, compressor discharge pressure, supply air temperature, return air temperature, humidity, etc.) of the MCCS 200 and communicate parameter data to the MCCS controller 270. The MCCS 200 is powered by a power module 212. The TCCU 210 is disposed on a front wall 230 of the TU 225. In other embodiments, it will be appreciated that the TCCU 210 can be disposed, for example, on a rooftop 226 or another wall of the TU 225.

In some embodiments, the MCCS 200 can include an undermount unit 213. In some embodiments, the undermount unit 213 can be a TCCU that can also provide environmental control (e.g. temperature, humidity, air quality, etc.) within the internal climate controlled space 250 of the TU 225. The undermount unit 213 can work in combination with the TCCU 210 to provide redundancy or can replace the TCCU 210. Also, in some embodiments, the undermount unit 213 can be a power module that includes, for example, a generator that can help power the TCCU 210.

The programmable MCCS Controller 270 may comprise a single integrated control unit or may comprise a distributed network of control elements. The number of distributed control elements in a given network can depend upon the particular application of the principles described herein. The MCCS controller 270 is configured to control operation of the MCCS 200.

As shown in FIG. 1C, the power module 212 is disposed in the TCCU 210. In other embodiments, the power module 212 can be separate from the TCCU 210. Also, in some embodiments, the power module 212 can include two or more different power sources disposed within or outside of the TCCU 210. In some embodiments, the power module 212 can include one or more of a prime mover, a battery, an alternator, a generator, a solar panel, a fuel cell, etc. Also, the prime mover can be a combustion engine or a microturbine engine and can operate as a two speed prime mover, a variable speed prime mover, etc. The power module 212 can provide power to, for example, the MCCS Controller 270, a compressor (not shown), a plurality of DC (Direct Current) components (not shown), a power management unit (not shown), etc. The DC components can be accessories or components of the MCCS 200 that require DC power to operate. Examples of the DC components can include, for example, DC fan motor(s) for a condenser fan or an evaporator blower (e.g., an Electrically Commutated Motor (ECM), a Brushless DC Motor (BLDC), etc.), a fuel pump, a drain tube heater, solenoid valves (e.g., controller pulsed control valves), etc.

The power module 212 can include a DC power source (not shown) for providing DC electrical power to the plurality of DC components (not shown), the power management unit (not shown), etc. The DC power source can receive mechanical and/or electrical power from, for example, a utility power source (e.g., Utility power, etc.), a prime mover (e.g., a combustion engine such as a diesel engine, etc.) coupled with a generator machine (e.g., a belt-driven alternator, a direct drive generator, etc.), a series of battery sources, etc. For example, in some embodiments, mechanical energy generated by a diesel engine is converted into electrical energy via a generator machine. The electrical energy generated via the belt driven alternator is then converted into DC electrical power via, for example, a bi-directional voltage converter. The bi-directional voltage converter can be a bi-directional multi-battery voltage converter.

The internal climate controlled space 250 is divided into a plurality of zones 252a-c. The term "zone" means a part of an area of the internal climate controlled space 250 separated by walls or bulkheads 275. It will be appreciated that the embodiments described herein can also be used in a single zone TCCU as shown in FIG. 1B.

The MTRS 200 for the TU 225 includes the TCCU 210 and a plurality of remote evaporator units 280. The MTRS 200 is configured to control and maintain separate environmental condition requirements in each of the zones 252. The MTRS 200 includes a host unit provided within the TCCU 210 for providing climate control within the first zone 252 a and a plurality of remote units 180 disposed in the TU 225. Namely a first remote unit 280a is disposed in the second zone 252b and a second remote unit 280b is disposed in the third zone 252c. The host unit and the remote units 280 are collectively herein referred to as heat exchange units.

Each remote unit 280a, 280b is fluidly connected to the TCCU 210. The TCCU 210 and each remote unit 280a, 280b may include one or more heat exchangers (e.g., evaporator(s)), one or more blower(s) for providing climate control within the particular zone the heat exchanger unit is located, one or more flow regulating devices (e.g., solenoid valve(s), etc.) for controlling the amount of working fluid flow into the heat exchanger unit, and one or more throttling devices (e.g., electronic throttling valve(s), etc.) for controlling the amount of working fluid flow available to a suction end of the compressor of the MTRS 200. The heat exchange units (e.g., the host unit in TCCU 210 and each of the remote units 280) can operate in a plurality of operational modes (e.g., a continuous cooling mode, a start-stop cooling mode, a heating mode, a defrost mode, a null mode, etc.).

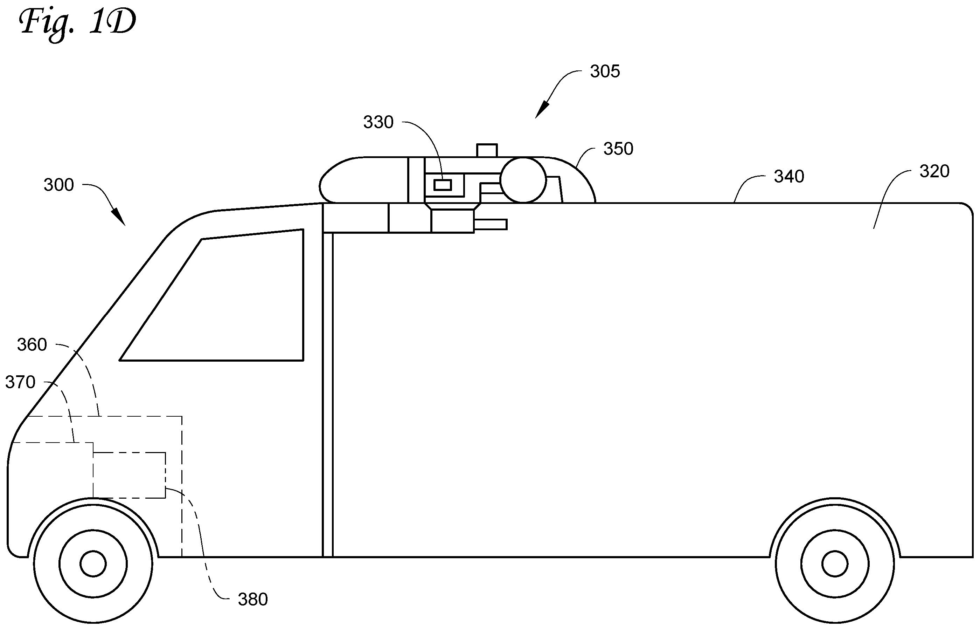

FIG. 1D depicts a temperature-controlled van 300 that includes a climate controlled load space 320 (or internal space) for carrying cargo and a transport climate control system (TCCS) 305. The TCCS 305 includes a transport climate control unit (TCCU) 350 that is mounted to a rooftop 340 of the climate controlled load space 320. The TCCS 305 is controlled via a controller 330 to provide climate control within the climate controlled load space 320. The van 300 further includes a vehicle power bay 360, which houses a prime mover 370, such as a combustion engine (e.g., diesel engine, etc.) or battery power source, that provides power to move the van 300 and to operate the TCCS 305. In some embodiments, the prime mover 370 can work in combination with an optional machine 380 (e.g., an alternator) to operate the TCCU 350. In one embodiment, the van 300 includes a vehicle electrical system. Also, in some embodiments, the van 300 can be a hybrid vehicle that is powered by the prime mover 370 in combination with a battery power source or can be an electrically driven truck in which the prime mover 370 is replaced with an electric power source (e.g., a battery power source).

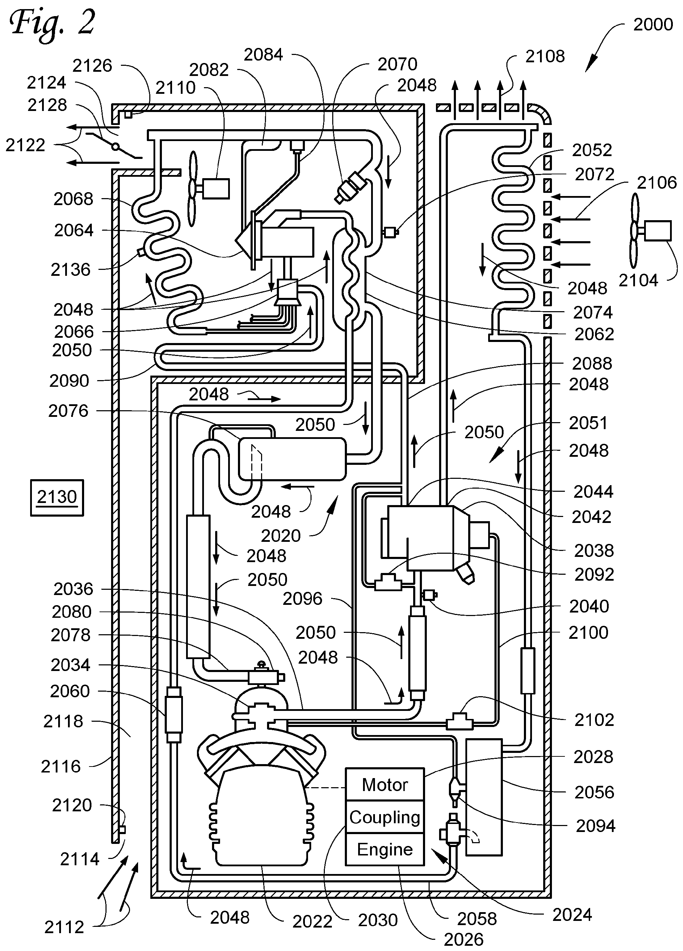

FIG. 2 illustrates a schematic diagram of a transport climate control system 2000, according to one embodiment that can be used in any of the above transport climate control systems 10, 100, 200, 305 shown in FIGS. 1A, 1B, 1C, 1D. The transport climate control system 2000 includes a closed working fluid circuit or flow path 2020 that can be used to provide climate control within, for example, a climate controlled space of a transport unit (e.g., the climate controlled space 12, 150, 250, 320 shown in FIGS. 1A-D), a passenger space of a mass transit vehicle, etc. A working fluid (e.g., a refrigerant) is configured to pass through components of the transport climate control circuit 2020 to provide climate control within the climate controlled space.

As shown in FIG. 2, the closed working fluid circuit or flow path 2020 includes a compressor 2022 driven by a drive unit 2024. The compressor 2022 can be a digital scroll compressor, a reciprocating compressor, a screw compressor, a positive displacement compressor, a centrifugal compressor, or other suitable type of compressor for compressing a working fluid.

In the illustrated embodiment, the drive unit 2024 includes an internal-combustion engine 2026 and a stand-by electric motor 2028. The engine 2026 and the motor 2028, when both are utilized, are connected to the compressor 2022 by a clutch or coupling 2030 which disengages the engine 2026 while the motor 2028 is in operation.

In some embodiments, such as the illustrated embodiment of FIG. 2, the transport climate control system 2000 can include a dedicated engine 2026. In other embodiments, the vehicle engine can also or alternately supply power to the transport climate control system 2000 or elements of the transport climate control system 10. In some embodiments, an independent power source (e.g., a battery, a fuel cell, etc.) can supply power to the transport climate control system.

A discharge valve 2034 and a discharge line 2036 connect the compressor 2022 to a three-way valve 2038. A discharge pressure transducer 2040 is located along the discharge line 2036, upstream from the three-way valve 2038 to measure the discharge pressure of the compressed working fluid. The three-way valve 2038 includes a first outlet port 2042 and a second outlet port 2044.

When the transport climate control system 2000 is operated in a cooling mode, the three-way valve 2038 is adjusted to direct working fluid from the compressor 2022 through the first outlet port 2042 and along a first circuit or flow path (represented by arrows 2048). When the transport climate control system 2000 is operated in heat and defrost modes, the three-way valve 2028 is adjusted to direct working fluid through the second outlet port 2044 and along a second circuit or flow path (represented by arrows 2050).

The first flow path 2048 extends from the compressor 2022 through the first outlet port 2042 of the three-way valve 2038, a condenser coil 2052, a one-way condenser check valve CV1, a receiver 2056, a liquid line 2058, a working fluid drier 2060, a heat exchanger 2062, an expansion valve 2064, a working fluid distributor 2066, an evaporator coil 2068, an electronic throttling valve 2070, a suction pressure transducer 2072, a second path 2074 through the heat exchanger 2062, an accumulator 2076, a suction line 2078, and back to the compressor 2022 through a suction port 2080. The expansion valve 2064 is controlled by a thermal bulb 2082 and an equalizer line 2084.

The second flow path 2050 can bypass a section of the working fluid circuit 2051, including the condenser coil 2052 and the expansion valve 2064, and can connect the hot gas output of compressor 2022 to the working fluid distributor 2066 via a hot gas line 2088 and a defrost pan heater 2090. The second flow path 2050 continues from the working fluid distributor 2066 through the evaporator coil 2068, the throttling valve 2070, the suction pressure transducer 2072, the second path 2074 through the heat exchanger 2062, and the accumulator 2076 and back to the compressor 2022 via the suction line 2078 and the suction port 2080.

A hot gas bypass valve 2092 is disposed to inject hot gas into the hot gas line 2088 during operation in the cooling mode. A bypass or pressurizing line 2096 connects the hot gas line 2088 to the receiver 2056 via check valves 2094 to force working fluid from the receiver 2056 into the second flow path 2050 during operation in the heating and defrost modes.

Line 2100 connects the three-way valve 2038 to the low-pressure side of the compressor 2022 via a normally closed pilot valve 2102. When the valve 2102 is closed, the three-way valve 2038 is biased (e.g., spring biased) to select the first outlet port 2042 of the three-way valve 2038. When the evaporator coil 2052 requires defrosting and when heating is required, valve 2092 is energized and the low pressure side of the compressor 2022 operates the three-way valve 2038 to select the second outlet port 2044 to begin operation in the heating mode and/or defrost modes.

A condenser fan or blower 2104 directs ambient air (represented by arrows 2106) across the condenser coil 2052. Return air (represented by arrows 2108) heated by contact with the condenser fan 2104 is discharged to the atmosphere. One or more evaporator blowers 2110 draws load space air (represented by arrows 2112) through an inlet 2114 in an evaporator blower bulkhead or wall 2116 and upwardly through conduit 2118. A return air temperature sensor 2120 measures the temperature of air entering the inlet 2114. An evaporator coil temperature sensor 2136 can be positioned adjacent to or on the evaporator coil 2068 for recording the evaporator coil temperature. In other embodiments, the evaporator coil temperature sensor 2136 can be positioned in other locations. In still other embodiments, other sensors, such as, for example, the return air temperature sensor 2120 and/or the discharge air temperature sensor (described below) 2126 can also or alternately be used to calculate the evaporator coil temperature.

Discharge air (represented by arrow 2122) is returned to the climate controlled space 2014 via outlet 2124. Discharge air temperature sensor 2126 is positioned adjacent to the outlet 2124 and measures the discharge air temperature. During the DEFROST mode, a damper 2128 is moved from an opened position (shown in FIG. 2) toward a closed position (not shown) to close the discharge air path to the climate controlled space 2014. It will be appreciated that in some embodiments, the transport climate control system 2000 may not include the damper 2128, for example, when the evaporator blowers 2110 are electrically powered evaporator blowers as opposed to mechanically powered evaporator blowers.

In some embodiments, the evaporator can also include an optional heating device (not shown) that can provide thermal energy for defrosting the evaporator coil 2068 during the defrost mode or heat during the heating mode. This can allow for increased flexibility in defrost operation, such as, during frequent door openings of the climate controlled space 2014 (e.g., also referred to as door opening events). In some embodiments, the heating device can be an electric heating device that uses heating coils or an electric heater having an electrical resistor that converts electricity to heat and/or an electric heating bar that is able to generate heat and/or includes a heating fin connected to the electric heating device, electric heater, or electric heating bar to conduct heat from the heating source to evenly distribute the supply of heat in the evaporator by having an increased area to increase the rate of heat transfer. Also, in some embodiments, the discharge from the compressor 2022 having the compressed working fluid can be connected to the heating device 2050 (and optionally also including an electric heating element) to provide thermal energy to the evaporator in order to provide heating to the climate controlled space and/or the evaporator. It is appreciated that other heat sources can be used for providing heat to the heating device, for example, a thermal storage system that uses brine or phase change material for capturing heat from the transport climate control circuit or other heating source from the transport unit, e.g., oil, exhaust, etc.

The one or more evaporator blowers 2110, the evaporator coil 2068, an evaporator drain, and other components of the evaporator can be housed within an evaporator blower space. The evaporator blower space can be defined at least partially by the evaporator blower bulkhead 2116.

The transport climate control system 2000 also includes a controller 2130 (e.g., the controller 15, 170, 270, 330 shown in FIGS. 1A, 1B, 1C, 1D). The controller 2130 receives data from sensors, including the evaporator coil temperature sensor 2136, the return air temperature sensor 2124 and the discharge air temperature sensor 2126. Additionally, given temperature data and programmed parameters, the controller 2130 is configured to control the transport climate control system 2000 to operate in a plurality of different operation modes including, for example, a continuous cooling mode, a start-stop cooling mode, a heating mode, a defrost mode, a null mode, etc.

In the continuous cooling mode, the controller 2130 is configured to instruct the compressor 2022 to continuously compress the working fluid until the temperature within the climate controlled space 2014 reaches a desired setpoint temperature.

In the start-stop cooling mode, the controller 2130 is configured to instruct the compressor 2022 to operate in a periodic cycle in which during each cycle the compressor 2022 is configured to compress the working fluid for a first period of time and then the compressor 2022 is configured to stop compressing the working fluid for a second period of time. The compressor 2022 will continue to cycle between compressing the working fluid and not compressing the working fluid until the temperature within the climate controlled space 2014 reaches the desired setpoint temperature. In some embodiments, the compressor 2022 is configured to compress the working fluid and direct the compressed working fluid from the compressor 2022 to the condenser coil 2052 during the start portion and configured to not compress working fluid during the stop portion. In some embodiments, during the stop portion of the start-stop cooling mode the condenser fan 2104 and the one or more evaporator blowers 2110 are turned off and are not operating.

In the defrost mode, hot gases are directed through the evaporator coil 2068 to heat the evaporator coil 2068 and melt any frost/ice that may have accumulated on the evaporator coil 2068. Alternatively or optionally, a heating device can be used to heat the air in the evaporator blower space. To prevent unnecessary heating of the conditioned space, air is not directed through the evaporator coil 2068 during operation in the defrost mode. In defrost, airflow is typically restricted using the damper 2158 to close the discharge while the one or more evaporator blowers 2110 continue to operate. As noted above, in some embodiments, the transport climate control system 2000 may not include the damper 2158. In some embodiments, the controller 2130 can be configured to cycle between the defrost mode and one or more of the other operation modes to prevent ice/frost buildup on the evaporator coil 2068. In these embodiments, the controller 2130 can be configured to cycle from one of the other operation modes to the defrost mode after a defrost interval duration has passed. In some embodiments, the defrost interval duration can be, for example, 12 hours, 10 hours, 8 hours, 6 hours, 4 hours, 2 hours, etc. As discussed in more detail below, the defrost interval duration can be adjustable.

In the heating mode, hot gases are directed through the evaporator coil 2068 to heat the evaporator coil 2068. In some embodiments, the one or more evaporator blowers 2110 can be configured to operate to allow air heated by the evaporator coil 2068 to blow into the climate controlled space 2014. In embodiments where the damper 2158 is provided, the optional damper 2158 can be at least partially opened during the heating mode.

In the null mode, the transport climate control system 2000 can be configured to prevent working fluid flow through the evaporator coil 2068 and/or configured to stop operation of the compressor 2022. In some embodiments, the controller 2130 can be configured to continue operation of the evaporator blowers 2110 or operate the evaporator blowers 2110 in an on-off cycle whereby the evaporator blowers 2110 are running for a first time period (e.g., 5 seconds) and the turned off for a second time period (e.g., 5 seconds). It will be appreciated that the first time period and the second time period can be different.

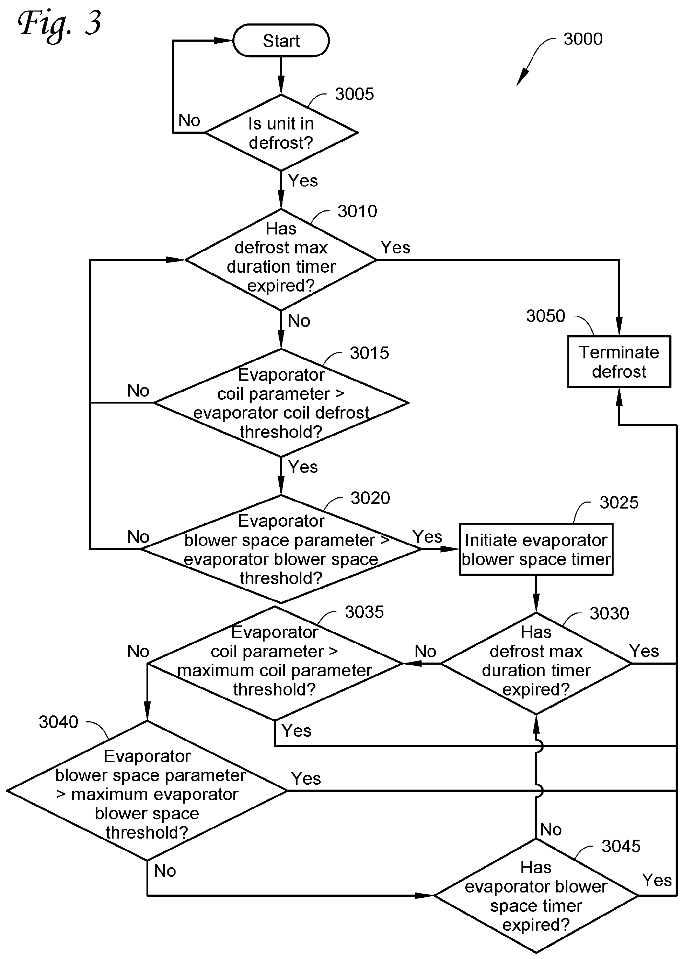

FIGS. 3-6 illustrate control methods for reducing ice/frost buildup in an evaporator blower space using the defrost mode of a transport climate control system (e.g., transport climate control systems 10, 100, 200, 305, 2000 shown in FIGS. 1A, 1B, 1C, 1D, 2) by a controller (e.g., the controllers (e.g., the controllers 15, 170, 270, 330, 2130 shown in FIGS. 1A, 1B, 1C, 1D, 2), according to several different embodiments. In embodiments, where the transport climate control system is a multizone transport climate control system (e.g., MTRS 200 shown in FIG. 1B), the methods shown in FIGS. 3-6 can be used to terminate defrost in the TCCU 210 or the remote evaporator units 280a,b.

FIG. 3 illustrates a method 3000 for reducing ice/frost buildup in an evaporator blower space using the defrost mode, according to a first embodiment. The method 3000 is configured to monitor the evaporator blower space in addition to monitoring the evaporator coil to determine when the defrost mode is terminated. That is, the method 3000 ensures that frost/ice buildup is removed/reduced in the evaporator blower space before the defrost mode is terminated. The method 3000 begins at 3005 whereby the controller determines whether the transport climate control system is operating in the defrost mode. When the controller determines that the transport climate control system is operating in the defrost mode, the method 3000 proceeds to 3010.

At 3010, the controller determines whether a defrost maximum duration timer has expired. The defrost maximum duration timer can be a customer or user selectable option. In some embodiments, the defrost maximum duration timer can be, for example, 30 minutes, 45 minutes, etc. The defrost maximum duration timer allows the transport climate control system to operate efficiently while maintaining required climate control performance (e.g., temperature control). For example, operating the defrost mode for longer than the defrost maximum duration timer can impact the efficiency of the transport climate control system to provide the desired/required climate and can provide excessive heating of internal components of the transport climate control system. If the controller determines that the defrost maximum duration timer has not expired, the method 3000 proceeds to 3015. If the controller determines that the defrost maximum duration timer has expired, the method 3000 proceeds to 3050.

At 3015, the controller monitors an evaporator coil parameter of the evaporator coil and determines whether the evaporator coil parameter is greater than an evaporator coil defrost threshold. The evaporator coil parameter can be one or a combination of an evaporator coil temperature, a return air temperature from the climate controlled space, a discharge air temperature to the climate controlled space, an evaporator outlet pressure, an evaporator outlet pressure, an evaporator outlet saturation temperature, a suction pressure to the compressor, a suction temperature, a discharge pressure from the compressor, a discharge temperature, an evaporator blower space temperature, an output of an image sensor monitoring the evaporator coil, etc. For example, in some embodiments, the evaporator coil parameter can be an evaporator coil temperature monitored by an evaporator coil temperature sensor disposed adjacent or onto the evaporator coil. In embodiments where the evaporator coil parameter is the evaporator coil temperature, the evaporator coil defrost threshold can be, for example, about 60°F. If the controller determines that the monitored evaporator coil parameter is greater than the evaporator coil defrost threshold, the method 3000 proceeds to 3020. If the controller determines that the monitored evaporator coil parameter is less than or equal to the evaporator coil defrost threshold, the method 3000 proceeds back to 3010.

At 3020, the controller monitors an evaporator blower space parameter within the evaporator blower space and determines whether the evaporator blower space parameter is greater than an evaporator blower space threshold. The evaporator blower space parameter can be one or a combination of a return air temperature, a discharge air temperature, an evaporator outlet pressure, an evaporator outlet saturation temperature, a suction pressure, a suction temperature, a discharge pressure, a discharge temperature, an evaporator blower space temperature, an output of an image sensor in the evaporator blower space, etc. If the controller determines that the monitored evaporator blower space parameter is greater than the evaporator blower space threshold, the method 3000 proceeds to 3025. If the controller determines that the monitored evaporator blower space parameter is less than or equal to the evaporator blower space threshold, the method 3000 proceeds back to 3010.

For example, in some embodiments, the evaporator blower space parameter can be a discharge air temperature monitored by a discharge air temperature sensor. It will be appreciated that the discharge air temperature of discharge air distributed by the one or more evaporator blowers into the climate controlled space (e.g., the climate controlled space 12, 150, 250, 320 shown in FIGS. 1A-D) can be indicative of the temperature within the evaporator blower space. In embodiments when the evaporator blower space parameter is the discharge air temperature, the evaporator blower space threshold can be a discharge air temperature threshold of, for example, 35°F. By ensuring that the discharge air temperature is above 35°F, the controller can determine that the temperature within the evaporator blower space is at a temperature in which frost/ice buildup in the evaporator blower space can be reduced.

In another example, the evaporator blower space parameter can be monitored by a camera. In these embodiments, one or more images taken by the camera can be analyzed by the controller to determine whether there is frost/ice buildup in the evaporator blower space.

At 3025, the controller initiates an evaporator blower space timer. In some embodiments, the evaporator blower space timer can be an amount of time required to remove ice/frost buildup within the evaporator blower space. For example, in some embodiments, the evaporator blower space timer can be about five minutes. The method 3000 then proceeds to 3030.

At 3030, the controller determines whether the defrost maximum duration timer has expired. If the controller determines that the defrost maximum duration timer has not expired, the method 3000 proceeds to 3035. If the controller determines that the defrost maximum duration timer has expired, the method 3000 proceeds to 3050.

At 3035, the controller monitors the evaporator coil parameter of the evaporator coil and determines whether the evaporator coil parameter is greater than a maximum coil parameter threshold. The maximum coil parameter allows the transport climate control system to operate efficiently while maintaining required climate control performance (e.g., temperature control). For example, allowing the evaporator coil parameter to exceed the maximum coil parameter can impact the efficiency of the transport climate control system to provide the desired/required climate and can provide excessive heating of internal components of the transport climate control system (including the evaporator coil).

In embodiments where the evaporator coil parameter is the evaporator coil temperature monitored by an evaporator coil temperature sensor disposed adjacent or onto the evaporator coil, the maximum coil parameter threshold can be a maximum coil temperature of the evaporator coil. Similarly, when the evaporator coil parameter is the return air temperature, the maximum coil parameter threshold can be a maximum return air temperature; when the evaporator coil parameter is the discharge air temperature, the maximum coil parameter can be a maximum discharge air temperature; when the evaporator coil parameter is the suction temperature, the maximum coil parameter threshold can be a maximum suction temperature; when the evaporator coil parameter is the suction pressure, the maximum coil parameter can be a maximum suction pressure; when the evaporator coil parameter is the discharge pressure, the maximum coil parameter can be a maximum discharge pressure; when the evaporator coil parameter is the evaporator outlet temperature, the maximum coil parameter can be a maximum evaporator outlet temperature; etc.

In one example, when the evaporator coil parameter is the return air temperature, the maximum coil parameter threshold can be a maximum return air temperature. In embodiments where the evaporator coil parameter is the evaporator coil temperature, the maximum coil parameter threshold can be, for example, 95° F, 100° F, etc.

If the controller determines that the monitored evaporator coil parameter is greater than the maximum coil parameter threshold, the method 3000 proceeds to 3050. If the controller determines that the monitored evaporator coil parameter is less than or equal to the maximum coil parameter threshold, the method 3000 proceeds to 3040.

At 3040, the controller monitors the evaporator blower space parameter within the evaporator blower space and determines whether the evaporator blower space parameter is greater than a maximum evaporator blower space threshold. By setting a maximum evaporator blower space threshold, a balance between effectively removing ice/frost buildup in the evaporator blower space while minimizing impact on climate control within the climate controlled space and minimizing energy consumption of the transport climate control system.

In embodiments where the evaporator blower space parameter is a discharge air temperature, the maximum evaporator blower space threshold can be a maximum discharge air temperature set to, for example, about 60°F.

If the controller determines that the monitored evaporator blower space parameter is greater than the maximum evaporator blower space threshold, the method 3000 proceeds to 3050. If the controller determines that the monitored evaporator coil parameter is less than or equal to the maximum evaporator blower space threshold, the method 3000 proceeds to 3045.

At 3045, the controller determines whether the evaporator blower space timer has expired. If the controller determines that the evaporator blower space timer has not expired, the method 3000 proceeds to 3035. If the controller determines that the evaporator blower space timer has expired, the method 3000 proceeds to 3050.

At 3050, the controller terminates defrost and the transport climate control system transitions from the defrost mode to another operation mode such as the continuous cooling mode, the start-stop cooling mode, the null mode, etc.

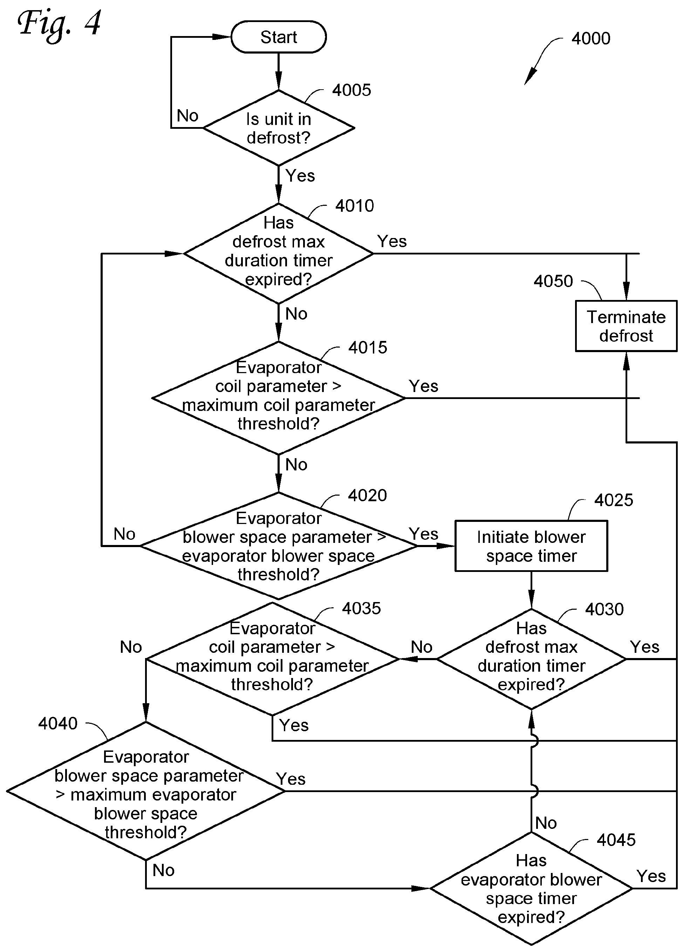

FIG. 4 illustrates a method 4000 for reducing ice/frost buildup in an evaporator blower space using the defrost mode, according to a second embodiment. The method 4000 is configured to monitor the evaporator blower space to determine when the defrost mode is terminated. That is, the method 4000 ensures that frost/ice buildup is removed/reduced in the evaporator blower space before the defrost mode is terminated. The method 4000 begins at 4005 whereby the controller determines whether the transport climate control system is operating in the defrost mode. When the controller determines that the transport climate control system is operating in the defrost mode, the method 4000 proceeds to 4010.

At 4010, the controller determines whether a defrost maximum duration timer has expired (similar to 3010 in FIG. 3). In some embodiments, the defrost maximum duration timer can be, for example, 30 minutes, 45 minutes, etc. If the controller determines that the defrost maximum duration timer has not expired, the method 4000 proceeds to 4015. If the controller determines that the defrost maximum duration timer has expired, the method 4000 proceeds to 4050.

At 4015, the controller monitors an evaporator coil parameter of the evaporator coil and determines whether the evaporator coil parameter is greater than a maximum coil parameter threshold (similar to 3035 in FIG. 3).

In embodiments where the evaporator coil parameter is the evaporator coil temperature monitored by an evaporator coil temperature sensor disposed adjacent or onto the evaporator coil, the maximum coil parameter threshold can be a maximum coil temperature of the evaporator coil. In embodiments where the evaporator coil parameter is the evaporator coil temperature, the maximum coil parameter threshold can be, for example, 95° F, 100° F, etc.

If the controller determines that the monitored evaporator coil parameter is greater than the maximum coil parameter threshold, the method 4000 proceeds to 4050. If the controller determines that the monitored evaporator coil parameter is less than or equal to the maximum coil parameter threshold, the method 4000 proceeds to 4020.

At 4020, the controller monitors an evaporator blower space parameter within the evaporator blower space and determines whether the evaporator blower space parameter is greater than an evaporator blower space threshold (similar to 3020 in FIG. 3). If the controller determines that the monitored evaporator blower space parameter is greater than the evaporator blower space threshold, the method 4000 proceeds to 4025. If the controller determines that the monitored evaporator blower space parameter is less than or equal to the evaporator blower space threshold, the method 4000 proceeds back to 4010.

For example, in some embodiments, the evaporator blower space parameter can be a discharge air temperature monitored by a discharge air temperature sensor. It will be appreciated that the discharge air temperature of discharge air distributed by the one or more evaporator blowers into the climate controlled space (e.g., the climate controlled space 12, 150, 250, 320 shown in FIGS. 1A-D) can be indicative of the temperature within the evaporator blower space. In embodiments when the evaporator blower space parameter is the discharge air temperature, the evaporator blower space threshold can be a discharge air temperature threshold of, for example, 35°F. By ensuring that the discharge air temperature is above 35°F, the controller can determine that the temperature within the evaporator blower space is at a temperature in which frost/ice buildup in the evaporator blower space can be reduced.

At 4025, the controller initiates an evaporator blower space timer. In some embodiments, the evaporator blower space timer can be an amount of time required to remove ice/frost buildup within the evaporator blower space. For example, in some embodiments, the evaporator blower space timer can be about five minutes. The method 4000 then proceeds to 4030.

At 4030, the controller determines whether the defrost maximum duration timer has expired. If the controller determines that the defrost maximum duration timer has not expired, the method 4000 proceeds to 4035. If the controller determines that the defrost maximum duration timer has expired, the method 4000 proceeds to 4050.

At 4035, the controller monitors the evaporator coil parameter of the evaporator coil and again determines whether the evaporator coil parameter is greater than the maximum coil parameter threshold (similar to 3035 in FIG. 3). In one example, when the evaporator coil parameter is the return air temperature, the maximum coil parameter threshold can be a maximum return air temperature. In embodiments where the evaporator coil parameter is the evaporator coil temperature, the maximum coil parameter threshold can be, for example, 95° F, 100° F, etc. If the controller determines that the monitored evaporator coil parameter is greater than the maximum coil parameter threshold, the method 4000 proceeds to 4050. If the controller determines that the monitored evaporator coil parameter is less than or equal to the maximum coil parameter threshold, the method 4000 proceeds to 4040.

At 4040, the controller monitors the evaporator blower space parameter within the evaporator blower space and determines whether the evaporator blower space parameter is greater than a maximum evaporator blower space threshold (similar to 3040 in FIG. 3). In embodiments where the evaporator blower space parameter is a discharge air temperature, the maximum evaporator blower space threshold can be a maximum discharge air temperature set to, for example, about 60°F. If the controller determines that the monitored evaporator blower space parameter is greater than the maximum evaporator blower space threshold, the method 4000 proceeds to 4050. If the controller determines that the monitored evaporator coil parameter is less than or equal to the maximum evaporator blower space threshold, the method 4000 proceeds to 4045.

At 4045, the controller determines whether the evaporator blower space timer has expired. If the controller determines that the evaporator blower space timer has not expired, the method 4000 proceeds to 4035. If the controller determines that the evaporator blower space timer has expired, the method 4000 proceeds to 4050.

At 4050, the controller terminates defrost and the transport climate control system transitions from the defrost mode to another operation mode such as the continuous cooling mode, the start-stop cooling mode, the null mode, etc.

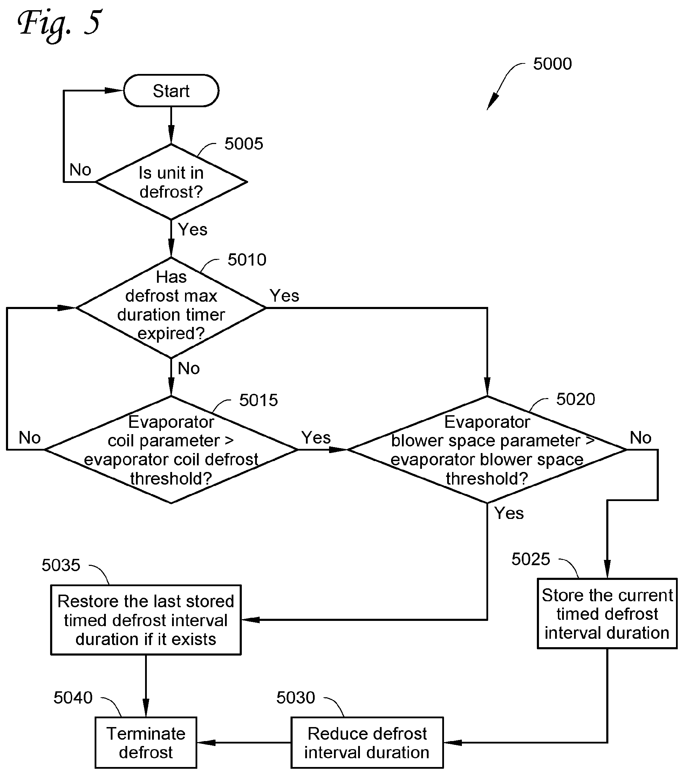

FIG. 5 illustrates a method 5000 for reducing ice/frost buildup in an evaporator blower space using the defrost mode, according to a third embodiment. The method 5000 is configured to adjust the defrost interval duration based on whether ice/frost buildup in the evaporator blower space is detected. For example, if the controller detects ice/frost buildup in the evaporator blower space after the defrost maximum duration timer has expired and/or ice/frost buildup is no longer detected on the evaporator coil, the controller can reduce the defrost interval duration so that the defrost mode can be initiated more frequently. In some embodiments, the method 5000 can be in parallel with either of the methods 3000 and 4000 shown in FIGS. 3 and 4. The method 5000 begins at 5005 whereby the controller determines whether the transport climate control system is operating in the defrost mode. When the controller determines that the transport climate control system is operating in the defrost mode, the method 5000 proceeds to 5010.

At 5010, the controller determines whether a defrost maximum duration timer has expired (similar to 3010 in FIG. 3). If the controller determines that the defrost maximum duration timer has not expired, the method 5000 proceeds to 5015. If the controller determines that the defrost maximum duration timer has expired, the method 5000 proceeds to 5020.

At 5015, the controller monitors an evaporator coil parameter of the evaporator coil and determines whether the evaporator coil parameter is greater than an evaporator coil defrost threshold (similar to 3015 shown in FIG. 3).

For example, in some embodiments, the evaporator coil parameter can be an evaporator coil temperature monitored by an evaporator coil temperature sensor disposed adjacent or onto the evaporator coil. In embodiments where the evaporator coil parameter is the evaporator coil temperature, the evaporator coil defrost threshold can be, for example, about 60°F.

If the controller determines that the monitored evaporator coil parameter is greater than the evaporator coil defrost threshold, the method 5000 proceeds to 5020. If the controller determines that the monitored evaporator coil parameter is less than or equal to the evaporator coil defrost threshold, the method 5000 proceeds back to 5010.

At 5020, the controller monitors an evaporator blower space parameter within the evaporator blower space and determines whether the evaporator blower space parameter is greater than an evaporator blower space threshold (similar to 3020 in FIG. 3). If the controller determines that the monitored evaporator blower space parameter is greater than the evaporator blower space threshold, the method 5000 proceeds to 5035. If the controller determines that the monitored evaporator blower space parameter is less than or equal to the evaporator blower space threshold, the method 5000 proceeds to 5025.

For example, in some embodiments, the evaporator blower space parameter can be a discharge air temperature monitored by a discharge air temperature sensor. It will be appreciated that the discharge air temperature of discharge air distributed by the one or more evaporator blowers into the climate controlled space (e.g., the climate controlled space 12, 150, 250, 320 shown in FIGS. 1A-D) can be indicative of the temperature within the evaporator blower space. In embodiments when the evaporator blower space parameter is the discharge air temperature, the evaporator blower space threshold can be a discharge air temperature threshold of, for example, 35°F. By ensuring that the discharge air temperature is above 35°F, the controller can determine that the temperature within the evaporator blower space is at a temperature in which frost/ice buildup in the evaporator blower space can be reduced.

In another example, the evaporator blower space parameter can be monitored by a camera. In these embodiments, one or more images taken by the camera can be analyzed by the controller to determine whether there is frost/ice buildup in the evaporator blower space.

At 5025, the controller stores the current timed defrost interval duration between defrost mode cycles. The method 5000 then proceeds to 5030.

At 5030, the controller is configured to reduce the defrost interval duration. In some embodiments, the controller can reduce the defrost interval duration by an incremental amount (e.g., reduce by 2 hours). For example, if the defrost interval duration stored at 5025 is 12 hours, the controller can be configured to reduce the defrost interval duration by two hours so that the new defrost interval duration is 10 hours. In other embodiments, the controller can reduce the defrost interval duration to a lowest possible value (e.g., 2 hours). For example, regardless of the defrost interval duration stored at 5025, the controller can be configured to reduce the defrost interval duration to 2 hours. By reducing the defrost interval duration, the method 5000 can increase the frequency in which the defrost mode is initiated to help reduce ice/frost buildup within the evaporator blower space. The method 5000 then proceeds to 5040.

At 5035, the controller is configured to restore the last stored defrost interval duration. For example, if during a previous defrost mode cycle, the defrost interval duration is 10 hours, the controller can be configured to maintain the defrost interval duration to 10 hours. In some embodiments, the last stored defrost interval duration can be a customer or user selected defrost interval duration. In some embodiments, the customer or user can set the defrost interval duration via a human-machine-interface (HMI) of the transport climate control system. The method 5000 then proceeds to 5040.

At 5040, the controller terminates defrost and the transport climate control system transitions from the defrost mode to another operation mode such as the continuous cooling mode, the start-stop cooling mode, the null mode, etc.

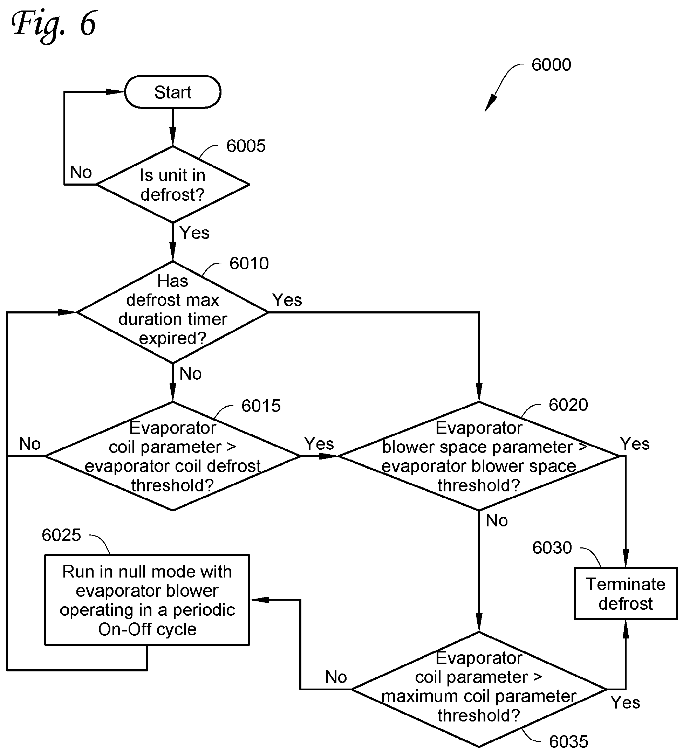

FIG. 6 illustrates a method 6000 for reducing ice/frost buildup in an evaporator blower space using the defrost mode, according to a fourth embodiment. The method 6000 is configured to operate the transport climate control system in the null mode with the evaporator blower being instructed to cycle on and off when ice/frost buildup in the evaporator blower space is detected in order to use heat generated by the evaporator blower to reduce ice/frost buildup in the evaporator blower space. In some embodiments, the null mode can also circulate heat from the evaporator coil and surrounding air after the defrost cycle and move the heated air through the evaporator blower space to aid in melting the ice/frost buildup in the evaporator blower space. For example, if the controller detects ice/frost buildup in the evaporator blower space after the defrost maximum duration timer has expired and/or ice/frost buildup is no longer detected on the evaporator coil, the controller can instruct the transport climate control system to operate in the null mode and cycle the evaporator blower on and off. In some embodiments, the method 6000 can be in parallel with either of the methods 3000, 4000 and 5000 shown in FIGS. 3, 4 and 5. The method 6000 begins at 6005 whereby the controller determines whether the transport climate control system is operating in the defrost mode. When the controller determines that the transport climate control system is operating in the defrost mode, the method 6000 proceeds to 6010.

At 6010, the controller determines whether a defrost maximum duration timer has expired (similar to 3010 in FIG. 3). If the controller determines that the defrost maximum duration timer has not expired, the method 6000 proceeds to 6015. If the controller determines that the defrost maximum duration timer has expired, the method 6000 proceeds to 6030.

At 6015, the controller monitors an evaporator coil parameter of the evaporator coil and determines whether the evaporator coil parameter is greater than an evaporator coil defrost threshold (similar to 3015 shown in FIG. 3). For example, in some embodiments, the evaporator coil parameter can be an evaporator coil temperature monitored by an evaporator coil temperature sensor disposed adjacent or onto the evaporator coil. In embodiments where the evaporator coil parameter is the evaporator coil temperature, the evaporator coil defrost threshold can be, for example, about 60°F. If the controller determines that the monitored evaporator coil parameter is greater than the evaporator coil defrost threshold, the method 6000 proceeds to 6020. If the controller determines that the monitored evaporator coil parameter is less than or equal to the evaporator coil defrost threshold, the method 6000 proceeds back to 6010.

At 6020, the controller monitors an evaporator blower space parameter within the evaporator blower space and determines whether the evaporator blower space parameter is greater than an evaporator blower space threshold (similar to 3020 shown in FIG. 3). If the controller determines that the monitored evaporator blower space parameter is less than or equal to the evaporator blower space threshold, the method 6000 proceeds to 6035. If the controller determines that the monitored evaporator blower space parameter is greater than the evaporator blower space threshold, the method 6000 proceeds to 6030.

For example, in some embodiments, the evaporator blower space parameter can be a discharge air temperature monitored by a discharge air temperature sensor. It will be appreciated that the discharge air temperature of discharge air distributed by the one or more evaporator blowers into the climate controlled space (e.g., the climate controlled space 12, 150, 250, 320 shown in FIGS. 1A-D) can be indicative of the temperature within the evaporator blower space. In embodiments when the evaporator blower space parameter is the discharge air temperature, the evaporator blower space threshold can be a discharge air temperature threshold of, for example, 35°F. By ensuring that the discharge air temperature is above 35°F, the controller can determine that the temperature within the evaporator blower space is at a temperature in which frost/ice buildup in the evaporator blower space can be reduced.

In another example, the evaporator blower space parameter can be monitored by a camera. In these embodiments, one or more images taken by the camera can be analyzed by the controller to determine whether there is frost/ice buildup in the evaporator blower space. In some embodiments, the controller can use artificial intelligence (AI) and/or image processing technology to aid in determining ice/frost buildup based on, for example, temperature, color of a coil surface area, thickness of ice/frost buildup, etc.

At 6035, the controller monitors an evaporator coil parameter of the evaporator coil and determines whether the evaporator coil parameter is greater than a maximum coil parameter threshold (similar to 3035 in FIG. 3).

In embodiments where the evaporator coil parameter is the evaporator coil temperature monitored by an evaporator coil temperature sensor disposed adjacent or onto the evaporator coil, the maximum coil parameter threshold can be a maximum coil temperature of the evaporator coil. In embodiments where the evaporator coil parameter is the evaporator coil temperature, the maximum coil parameter threshold can be, for example, 95° F, 100° F, etc.

If the controller determines that the monitored evaporator coil parameter is greater than the maximum coil parameter threshold, the method 6000 proceeds to 6030. If the controller determines that the monitored evaporator coil parameter is less than or equal to the maximum coil parameter threshold, the method 6000 proceeds to 6025.

At 6025, the controller initiates the transport climate control system to operate in a null mode with the evaporator blower instructed to operate in a periodic on-off cycle. For example, in one embodiment, the controller can instruct the evaporator blower to run for a first time period (e.g., five seconds) and then stop operation (e.g., turn off) for a second time period (e.g., 5 seconds). It will be appreciated that in other embodiments, the first time period and the second time period can be different. By instructing the transport climate control system to operate in the null mode while cycling the evaporator blower to run and stop running, heat generated by the evaporator blower can be used to reduce ice/frost buildup in the evaporator blower space. The method 6000 then proceeds to 6030.

At 6030, the controller terminates defrost and the transport climate control system transitions from the defrost mode to another operation mode such as the continuous cooling mode, the start-stop cooling mode, the null mode, etc.

### Aspects:

It is to be appreciated that any of aspects 1 - 8 can be combined with any of aspects 9- 16 or the embodiments discussed above.
Aspect 1. A method for reducing ice and/or frost buildup in an evaporator blower space of a transport climate control system, the evaporator blower space housing an evaporator blower of the transport climate control system, the method comprising:
   a controller instructing the transport climate control system to operate in a defrost mode;
   a controller monitoring an evaporator blower space parameter indicative of ice and/or frost buildup in the evaporator blower space;
   the controller determining ice and/or frost buildup in the evaporator blower space based on the evaporator blower space parameter;
   the controller adjusting operation of the transport climate control system to reduce ice and/or frost buildup in the evaporator blower space.
Aspect 2. The method of aspect 1, further comprising:
   the controller monitoring an evaporator coil parameter of an evaporator coil of the transport climate control system;
   the controller determining that the evaporator coil parameter is greater than an evaporator coil defrost threshold; and
   the controller terminating the defrost mode upon the controller determining that the evaporator coil parameter is greater than the evaporator coil defrost threshold and the controller determining that the evaporator blower space parameter is greater than an evaporator blower space threshold.
Aspect 3. The method of aspect 2, further comprising the controller reducing a defrost interval duration upon the controller determining that the evaporator coil parameter is greater than the evaporator coil defrost threshold and the controller determining that the evaporator blower space parameter is not greater than the evaporator blower space threshold,
   wherein the defrost interval duration is a period of time between the controller cycling from another operation mode to the defrost mode.
Aspect 4. The method of any one of aspects 1-3, wherein adjusting operation of the transport climate control system to reduce ice and/or frost buildup in the evaporator blower space includes the controller maintaining the defrost mode.
Aspect 5. The method of any one of aspects 1-3, wherein adjusting operation of the transport climate control system to reduce ice and/or frost buildup in the evaporator blower space includes the controller operating the transport climate control system in a null mode while instructing an evaporator blower to run for a first time period and stop operation for a second time period.
Aspect 6. The method of any one of aspects 1-5, further comprising:
   the controller monitoring a defrost maximum duration timer; and
   the controller terminating the defrost mode when the controller determines that the defrost maximum duration timer has expired.
Aspect 7. The method of any one of aspects 1-6, wherein the evaporator blower space parameter is a discharge air temperature, and
   wherein the controller determines ice and/or frost buildup in the evaporator blower space when the discharge air temperature is less than or equal to a discharge air temperature threshold.
Aspect 8. The method of any one of aspects 1-6, wherein the evaporator blower space parameter is obtained by the controller analyzing an image of the evaporator blower space, and
   wherein the controller determines ice and/or frost buildup in the evaporator blower space based on analyzing the image of the evaporator blower space.
Aspect 9. A transport climate control system comprising:
   an evaporator blower space housing an evaporator blower; and
   a controller configured to:
      instruct the transport climate control system to operate in a defrost mode,
      monitor an evaporator blower space parameter indicative of ice and/or frost buildup in the evaporator blower space,
      determine ice and/or frost buildup in the evaporator blower space based on the evaporator blower space parameter, and
      adjust operation of the transport climate control system to reduce ice and/or frost buildup in the evaporator blower space.
Aspect 10. The transport climate control system of aspect 9, wherein the controller is further configured to:
   monitor an evaporator coil parameter of an evaporator coil of the transport climate control system,
   determine that the evaporator coil parameter is greater than an evaporator coil defrost threshold, and
   terminate the defrost mode upon determining that the evaporator coil parameter is greater than the evaporator coil defrost threshold and determining that the evaporator blower space parameter is greater than an evaporator blower space threshold.
Aspect 11. The transport climate control system of aspect 10, wherein the controller is further configured to:
   reduce a defrost interval duration upon determining that the evaporator coil parameter is greater than the evaporator coil defrost threshold and determining that the evaporator blower space parameter is not greater than the evaporator blower space threshold,
   wherein the defrost interval duration is a period of time between the controller cycling from another operation mode to the defrost mode.
Aspect 12. The transport climate control system of any one of aspects 9-11, wherein the controller is configured to adjust operation of the transport climate control system to reduce ice and/or frost buildup in the evaporator blower space by maintaining the defrost mode.
Aspect 13. The transport climate control system of any one of aspects 9-11, wherein the controller is further configured to adjust operation of the transport climate control system to reduce ice and/or frost buildup in the evaporator blower space by operating the transport climate control system in a null mode while instructing an evaporator blower to run for a first time period and stop operation for a second time period.
Aspect 14. The transport climate control system of any one of aspects 9-13, wherein the controller is further configured to:
   monitor a defrost maximum duration timer; and
   terminate the defrost mode when the controller determines that the defrost maximum duration timer has expired.
Aspect 15. The transport climate control system of any one of aspects 9-14, wherein the evaporator blower space parameter is a discharge air temperature, and
   wherein the controller is configured to determine ice and/or frost buildup in the evaporator blower space when the discharge air temperature is less than or equal to a discharge air temperature threshold.
Aspect 16. The transport climate control system of any one of aspects 9-14, wherein the evaporator blower space parameter is obtained by the controller analyzing an image of the evaporator blower space, and
   wherein the controller is configured to determine ice and/or frost buildup in the evaporator blower space based on analyzing the image of the evaporator blower space.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, indicate the presence of the stated features, integers, steps, operations, elements, and/or components, but do not preclude the presence or addition of one or more other features, integers, steps, operations, elements, and/or components. The terms first, second, first side, second side, roadside, curbside, etc. are not intended to be limiting, but are only provided to give context of the relationship and understanding of the different features in the different embodiments of the invention.

With regard to the preceding description, it is to be understood that changes may be made in detail, especially in matters of the construction materials employed and the shape, size, and arrangement of parts, without departing from the scope of the present disclosure. The word "embodiment" as used within this specification may, but does not necessarily, refer to the same embodiment. This specification and the embodiments described are examples only. Other and further embodiments may be devised without departing from the basic scope thereof, with the true scope and spirit of the disclosure being indicated by the claims that follow.

## Claims

1. A method for reducing ice and/or frost buildup in an evaporator blower space of a transport climate control system, the evaporator blower space housing an evaporator blower of the transport climate control system, the method comprising:
a controller instructing the transport climate control system to operate in a defrost mode;
the controller monitoring an evaporator blower space parameter indicative of ice and/or frost buildup in the evaporator blower space;
the controller determining ice and/or frost buildup in the evaporator blower space based on the evaporator blower space parameter;
the controller adjusting operation of the transport climate control system to reduce ice and/or frost buildup in the evaporator blower space.

2. The method of claim 1, further comprising:
the controller monitoring an evaporator coil parameter of an evaporator coil of the transport climate control system;
the controller determining that the evaporator coil parameter is greater than an evaporator coil defrost threshold; and
the controller terminating the defrost mode upon the controller determining that the evaporator coil parameter is greater than the evaporator coil defrost threshold and the controller determining that the evaporator blower space parameter is greater than an evaporator blower space threshold, and optionally further comprising:
the controller reducing a defrost interval duration upon the controller determining that the evaporator coil parameter is greater than the evaporator coil defrost threshold and the controller determining that the evaporator blower space parameter is not greater than the evaporator blower space threshold,
wherein the defrost interval duration is a period of time between the controller cycling from another operation mode to the defrost mode.

3. The method of any one of claims 1 and 2, wherein adjusting operation of the transport climate control system to reduce ice and/or frost buildup in the evaporator blower space includes the controller maintaining the defrost mode.

4. The method of any one of claim 1 and 2 wherein adjusting operation of the transport climate control system to reduce ice and/or frost buildup in the evaporator blower space includes the controller operating the transport climate control system in a null mode while instructing an evaporator blower to run for a first time period and stop operation for a second time period.

5. The method of any one of claims 1-4, further comprising:
the controller monitoring a defrost maximum duration timer; and
the controller terminating the defrost mode when the controller determines that the defrost maximum duration timer has expired.

6. The method of any one of claims 1-5, wherein the evaporator blower space parameter is a discharge air temperature, and
wherein the controller determines ice and/or frost buildup in the evaporator blower space when the discharge air temperature is less than or equal to a discharge air temperature threshold.

7. The method of any one of claims 1-5, wherein the evaporator blower space parameter is obtained by the controller analyzing an image of the evaporator blower space, and
wherein the controller determines ice and/or frost buildup in the evaporator blower space based on analyzing the image of the evaporator blower space.

8. A transport climate control system comprising:
an evaporator blower space housing an evaporator blower; and
a controller configured to:
instruct the transport climate control system to operate in a defrost mode,
monitor an evaporator blower space parameter indicative of ice and/or frost buildup in the evaporator blower space,
determine ice and/or frost buildup in the evaporator blower space based on the evaporator blower space parameter, and
adjust operation of the transport climate control system to reduce ice and/or frost buildup in the evaporator blower space.

9. The transport climate control system of claim 8, wherein the controller is further configured to:
monitor an evaporator coil parameter of an evaporator coil of the transport climate control system,
determine that the evaporator coil parameter is greater than an evaporator coil defrost threshold, and
terminate the defrost mode upon determining that the evaporator coil parameter is greater than the evaporator coil defrost threshold and determining that the evaporator blower space parameter is greater than an evaporator blower space threshold, and optionally
wherein the controller is further configured to:
reduce a defrost interval duration upon determining that the evaporator coil parameter is greater than the evaporator coil defrost threshold and determining that the evaporator blower space parameter is not greater than the evaporator blower space threshold,
wherein the defrost interval duration is a period of time between the controller cycling from another operation mode to the defrost mode.

10. The transport climate control system of any one of claims 8 and 9, wherein the controller is configured to adjust operation of the transport climate control system to reduce ice and/or frost buildup in the evaporator blower space by maintaining the defrost mode.

11. The transport climate control system of any one of claims 8 and 9, wherein the controller is further configured to adjust operation of the transport climate control system to reduce ice and/or frost buildup in the evaporator blower space by operating the transport climate control system in a null mode while instructing an evaporator blower to run for a first time period and stop operation for a second time period.

12. The transport climate control system of any one of claims 8-11, wherein the controller is further configured to:
monitor a defrost maximum duration timer; and
terminate the defrost mode when the controller determines that the defrost maximum duration timer has expired.

13. The transport climate control system of any one of claims 8-12, wherein the evaporator blower space parameter is a discharge air temperature, and
wherein the controller is configured to determine ice and/or frost buildup in the evaporator blower space when the discharge air temperature is less than or equal to a discharge air temperature threshold.

14. The transport climate control system of any one of claims 8-12, wherein the evaporator blower space parameter is obtained by the controller analyzing an image of the evaporator blower space, and
wherein the controller is configured to determine ice and/or frost buildup in the evaporator blower space based on analyzing the image of the evaporator blower space.
